# EUROPÄISCHE PATENTSCHRIFT

(11) **EP 1 407 234 B1**
(45) Veröffentlichungstag und Bekanntmachung des Hinweises auf die Patenterteilung: **17.02.2016**
(21) Anmeldenummer: 02762345.3
(22) Anmeldetag: 11.07.2002
(51) Int. Cl.: G01F 1/66, G10K 11/00

(54) **MESSKOPF FÜR EIN ULTRASCHALL-DURCHFLUSSMESSGERÄT**
MEASURING HEAD FOR AN ULTRASONIC FLOW METER
TETE DE MESURE POUR DEBITMETRE A ULTRASONS

(30) Priorität: 13.07.2001 DE 10133395
(43) Veröffentlichungstag der Anmeldung: 14.04.2004
(73) Patentinhaber: Endress + Hauser Flowtec AG, 4153 Reinach (CH)
(72) Erfinder: WIEST, Achim, 79576 Weil am Rhein (DE); BERGER, Andreas, 4106 Therwil (DE)
(74) Vertreter: Andres, Angelika Maria
(86) Internationale Anmeldenummer: PCT/EP2002/007725
(87) Internationale Veröffentlichungsnummer: WO 2003/006932

(56) Entgegenhaltungen:
- EP-A2- 0 749 005
- DE-A1- 19 723 488
- DE-C- 19 809 207
- US-A- 5 176 140
- US-A- 5 664 456

## Beschreibung

Die Erfindung betrifft ein Koppelelement für ein Ultraschall-Durchflussmessgerät.

Ultraschall-Durchflussmessgeräte werden vielfach in der Prozess- und Automatisierungstechnik eingesetzt. Sie erlauben in einfacher Weise, den Volumendurchfluß in einer Rohrleitung berührungslos zu bestimmen.

Die bekannten Ultraschall-Durchflußmeßgeräte arbeiten entweder nach dem Doppler- oder nach dem Laufzeitdifferenz-Prinzip.

Beim Laufzeitdifferenz-Prinzip werden die unterschiedlichen Laufzeiten von Ultraschallimpulsen relativ zur Stömungsrichtung der Flüssigkeit ausgewertet.

Hierzu werden Ultraschallimpulse sowohl in wie auch entgegen der Strömung gesendet. Aus der Laufzeitdifferenz läßt sich die Fließgeschwindigkeit und damit bei bekanntem Durchmesser des Rohrleitungsabschnitts der Volumendurchfluß bestimmen.

Beim Doppler-Prinzip werden Ultraschallwellen mit einer bestimmten Frequenz in die Flüssigkeit eingekoppelt und die von der Flüssigkeit reflektierten Ultraschallwellen ausgewertet. Aus der Frequenzverschiebung zwischen den eingekoppelten und reflektierten Wellen läßt sich ebenfalls die Fließgeschwindigkeit der Flüssigkeit bestimmen.

Reflexionen in der Flüssigkeit treten jedoch nur auf, wenn Luftbläschen oder Verunreinigungen in dieser vorhanden sind, so daß dieses Prinzip hauptsächlich bei verunreinigten Flüssigkeiten Verwendung findet.

Die Ultraschallwellen werden in einem Messkopf erzeugt bzw. empfangen. Der jeweilige Messkopf ist an der Rohrwandung des betreffenden Rohrleitungsabschnitts fest angebracht. Seit neuerem sind auch Clamp-on-Ultraschall-Meßsysteme erhältlich. Bei diesen Systemen wird der Messkopf nur noch mit einem Spannverschluß an die Rohrwandung gepreßt. Derartige Systeme sind z. B. in der EP-B-686 255, US-A 44 84 478 oder US-A 45 98 593 beschrieben.

Ein weiteres Ultraschall-Durchflußmessgerät, das nach dem Laufzeitdifferenz-Prinzip arbeitet, ist in der US-A 50 52 230 beschrieben. Die Laufzeit wird hier mittels Bursts, das sind kurze sinusförmige Ultraschallimpulse, ermittelt.

Die wesentlichen Elemente eines Messkopfs sind das Messkopfgehäuse, ein Piezoelement mit Anschlußeinheit und ein Ultraschallkoppelelement aus Kunststoff. Im Piezoelement werden die Ultraschallwellen erzeugt und durch das Ultraschallkoppelelement zur Rohrwandung geführt und von dort in die Flüssigkeit geleitet.

Ähnliche Systeme sind beispielsweise in den Dokumenten DE19723488A1, EP0749005A2 oder DE19809207C beschrieben.
DE19723488A1 offenbart eine Einrichtung zum Befestigen eines Ultraschallwandlers an einem Messgerät. Zur Lösung dieser Aufgabe ist die Einrichtung erfindungsgemäß dadurch gekennzeichnet, dass die Halterung eine Mehrzahl von Noppen aufweist, die mit dem USW oder mit der Wand der Aufnahmeöffnung fest verbunden und mit dem jeweils anderen Element formschlüssig verriegelt sind.
EP0749005A2 offenbart einen Ultraschallwandler in einem zylinderförmigen Gehäuse, dessen Wandlermechanismus auf Ausnutzung des piezoelektrischen Effekts basiert, wobei der Ultraschallwandler mittels einer Vergussmasse im Gehäuse fixiert sein kann.
DE19809207C beschreibt einen Ultraschallwandler, wobei der Ultraschallwandler elastisch in ein Kunststoffgehäuse eingebettet ist.

Bei einem bekannten Messkopf steht das Ultraschallkoppelelement etwas am Messkopfgehäuse über, so daß nur das Ultraschallkoppelelement Kontakt mit dem Messrohr besitzt.
Aufgrund der geringen Wärmeleitfähigkeit des Ultraschallkoppelelements ist nur eine geringe Wärmeübertragung von der Rohrwandung zum Messkopf möglich. Dadurch können Temperaturgradienten im Messkopf entstehen, die sich nachteilig auf die Messgenauigkeit auswirken.
Ein weitere Nachteil bekannter Messköpfe ist, daß Messkopfgehäuse und Ultraschallkoppelelement verklebt sind. Dies erfordert sehr geringe Toleranzen bei der Herstellung des Messkopfgehäuses.
Vergussteile, die größerer Toleranzen aufweisen, müssen deshalb aufwendig nachgearbeitet werden.

Der Erfindung liegt die Aufgabe zugrunde, einen Messkopf für ein Ultraschall-Durchflussmessgerät vorzuschlagen, der die oben angegebenen Nachteile nicht aufweist, der insbesondere eine rasche homogenen Temperaturverteilung im Messkopf ermöglicht und Fertigungstoleranzen bei der Herstellung des Messkopfgehäuses erlaubt und der einfach und kostengünstig herstellbar ist.

Gelöst wird diese Aufgabe durch einen Messkopf für ein Ultraschall-Durchflussmessgerät mit einem teilweise offenen Messkopfgehäuse, in dem ein Ultraschallkoppelelement mit Piezoelement und eine elektrische Anschlusseinheit fixiert ist. Dadurch gekennzeichnet, dass das Ultraschallkoppelelement und das Messkopfgehäuse mittels der Vergussmasse zumindest teilweise miteinander vergossen sind und zusammen mit der Vergussmasse eine Kontaktfläche im Bereich der Öffnung des Messkopfgehäuses bilden, wobei der Abstand zwischen Innenwand des Messkopfgehäuses und Ultraschallkoppelelement im Bereich der Kontaktfläche mindestens 1 mm beträgt und die Vergussmasse einen Wärmeleitfähigkeitskoeffizienten von mindestens 1W/mK aufweist. Zur sicheren Fixierung des Koppelelements im Messkopfgehäuse durch die Vergussmasse sind am Messkopfgehäuse Verankerungselemente (z.B. Nasen oder Nuten) vorgesehen.

Die wesentliche Idee der Erfindung besteht darin, daß durch das Vergiessen Fertigungstoleranzen des Messkopfgehäuses ausgeglichen werden können und gleichzeitig beim Aufsetzen des Messkopfs auf das Messrohr über die gesamte Kontaktfläche ein effektiver Wärmeausgleich möglich ist.

In einfacher Weise ist die Kontaktfläche eben.

In einer Weiterentwicklung der Erfindung ist das Messkopfgehäuse aus Kostengründen nicht vollständig mit Vergussmasse gefüllt.

Die Erfindung wird anhand der nachfolgenden Zeichnungen näher erläutert. Es zeigt:
Fig. 1: Ultraschall-Durchflussmessgerät mit zwei Messköpfen in schematischer Darstellung
Fig. 2 Messkopf gemäß Fig. 1 im Schnitt

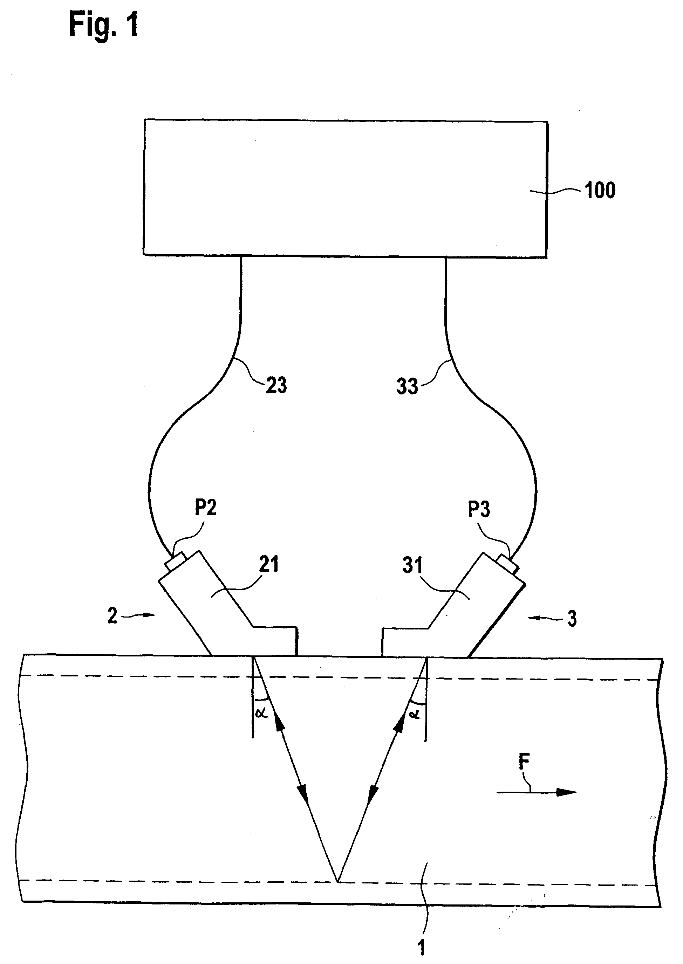

Fig. 1 zeigt in stark vereinfachter Darstellung ein Ultraschall-Durchflußmessgerät mit zwei Messköpfen 2, 3, die auf der Außenwandung einer Rohrleitung 1 achsparallel versetzt angeordnet sind. Die Flüssigkeit F in der Rohrleitung 1 fließt in Pfeilrichtung.

Das Messkopfpaar 2, 3 kann auf zwei unterschiedliche Weisen betrieben werden. Entweder wirkt der Messkopf 2 als Sender und der Messkopf 3 als Empfänger oder der Messkopf 3 als Sender und der Messkopf 2 als Empfänger, wodurch abwechselnd in Strömungsrichtung bzw. entgegen der Strömungsrichtung gemessen wird.

Beide Messköpfe 2,3 sind jeweils über Anschlußleitungen 23 bzw. 33 mit einer Meßschaltung 100 verbunden. Über diese Anschlußleitungen 23, 33 werden die elektrischen Impulse geführt. Derartige Meßschaltungen 100 sind bekannt und nicht Gegenstand der Erfindung.

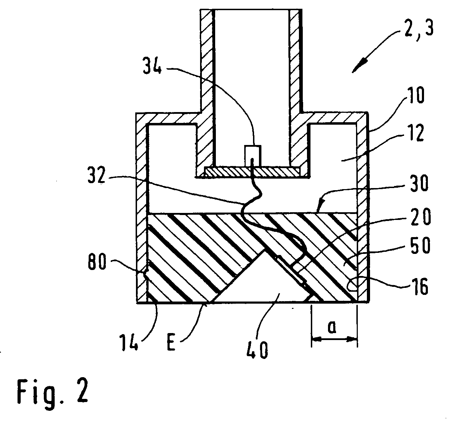

Fig. 2 zeigt etwa massstabsgetreu einen Messkopf gemäß Fig. 1 im Schnitt.
Die wesentlichen Elemente des Messkopfs 2 bzw. 3 sind Messkopfgehäuse 10, Piezoelement 20 mit Anschlußeinheit 30 und Ultraschallkoppelelement 40 aus Kunststoff (z.B. PEEK, PI, PEI) sowie Vergussmasse 50. Die Anschlusseinheit 30 besteht aus einem Kabelpaar mit Print 32 und einem Steckeranschluß 34 für die Anschlußleitungen 23 oder 33.
Das Messkopfgehäuse 10 weist eine Öffnung 14 zum Innenraum 12, in dem das Ultraschallkoppelelement 40 fixiert ist, auf.

Ultraschallkoppelelement 40, Messkopfgehäuse 10 und Vergussmasse 50 bilden im Bereich der Öffnung 14 eine Kontaktfläche E.

Im Bereich der Kontaktfläche E beträgt der Abstand zwischen Ultraschallkoppelelement 40 der Innenwand 16 des Messkopfgehäuses 10 mindestens 1 mm.

Zur Zusätzlichen Fixierung sind Verankerungselemente 80 am Messkopfgehäuse 10 vorgesehen. Dargestellt ist eine Nut; denkbar sind aber Nasen etc..
Der Messkopf 2 bzw. 3 ist für einen Temperaturbereich von -20° - + 80° Celsius geeignet.

Nachfolgend ist die Funktion des erfindungsgemäßen Messkopfs für ein Ultraschall-Durchmessgerät näher beschrieben.

Beim Einsatz des Messkopfs 2 bzw. 3 liegt dieser mit der gesamten Kontaktfläche E an der Außenwandung der Rohrleitung 1 an.

Eine Temperaturänderung der zu messenden Flüssigkeit führt zu einer Temperaturänderung der Außenwandung der Rohrleitung 1. Diese Temperaturänderung wird an den Messkopf 2 bzw. 3 weitergegeben. Dadurch daß der Wärmeübergang von der Rohrleitung 1 über die gesamte Kontaktfläche E erfolgt, ist ein rascher Temperaturausgleich möglich.
Der Wärmeübergang erfolgt nicht nur von der Rohrleitung 1 zum Ultraschallkoppelelement 40, sondern auch von der Rohrleitung 1 zur Vergussmasse 50 und dem Messkopfgehäuse 10.
Durch die gute Wärmeleitfähigkeit der Vergussmasse 50 und dem normalerweise aus Metall gefertigten Messkopfgehäuses 10 werden Temperaturgradienten innerhalb des Messkopfs 2 bzw. 3 schnell ausgeglichen. Dadurch ist eine zuverlässige Messung möglich.

Dadurch daß das Ultraschallkoppelelement 40 und das Messkopfgehäuse 10 vergossen sind, können Fertigungstoleranzen bei der Herstellung des Messkopfgehäuses 10 einfach ausgeglichen werden. Erst dieser Ausgleich ermöglicht die Kontaktfläche E. Es hat sich gezeigt, daß ein Abstand zwischen Messkopfgehäuse 10 und Ultraschallkoppelelement 40 von 1 mm im Bereich der Kontaktebene E ausreichend ist, um mögliche Fertigungstoleranzen auszugleichen.

Sinnvollerweise ist aus Kostengründen nicht der ganze Innenraum 12 mit Vergussmasse 50 gefüllt. Auch ein teilweiser Verguss gewährleistet eine sichere Fixierung des Ultraschallkoppelelements 40.

Beim Vergiessen dringt die Vergussmasse 50 in die Nut 80 ein und verhindert so nach dem Erstarren ein Lösen des Ultraschallkoppelelements 40 aus dem Messkopfgehäuse 10.

Der große Wärmeleitfähigkeitskoeffizient der Vergussmasse 50 trägt zu einem verbesserten Wärmeausgleich bei.

## Patentansprüche

1. Messkopf für ein Ultraschall-Durchflussmessgerät mit einem teilweise offenen Messkopfgehäuse (10), in dem ein Ultraschallkoppelelement (40) mit Piezoelement (20) und eine elektrische Anschlusseinheit (30) fixiert ist,
wobei das Ultraschallkoppelelement (40) und das Messkopfgehäuse (10) mittels einer Vergussmasse (50) zumindest teilweise miteinander vergossen sind und zusammen mit der Vergussmasse (50) eine Kontaktfläche E im Bereich der Öffnung (14) des Messkopfgehäuses (10) bilden,
wobei der Abstand a zwischen Innenwand (16) des Messkopfgehäuses (10) und Ultraschallkoppelelement (40) im Bereich der Kontaktfläche E mindestens 1 mm beträgt und die Vergussmasse (50) einen Wärmeleitfähigkeitskoeffizienten von mindestens 1W/mK aufweist;
wobei am Messkopfgehäuse (10) Verankerungselemente (80) zur Verankerung der Vergussmasse vorhanden sind, wobei das Ultraschallkoppelelement (40) durch die Vergussmasse (50) fixiert ist.

2. Messkopf nach Anspruch 1, wobei die Kontaktfläche E eben ist.

3. Messkopf nach einem der vorhergehenden Ansprüche, wobei das Messkopfgehäuse (10) nicht vollständig mit Vergussmasse (50) gefüllt ist.

4. Messkopf nach Anspruch 3, wobei
eine Nut als Verankerungselement (80) vorhanden ist.

5. Messkopf nach Anspruch 3, wobei
eine Nase als Verankerungselement (80) vorhanden ist.

## Claims

1. Measuring head for an ultrasonic flowmeter with a partially open measuring head housing (10) in which an ultrasonic coupling element (40) with a piezo-element (20) and an electrical connection unit (30) is fixed,
wherein the ultrasonic coupling element (40) and the measuring head housing (10) are at least partially cast together with a potting compound (50), and, together with the potting compound (50), form a contact surface E in the area of the opening (14) of the measuring head housing (10),
wherein the distance 'a' between the interior wall (16) of
the measuring head housing (10) and the ultrasonic coupling element (40) is at least 1 mm in the area of the contact surface E, and the potting compound (50) has a thermal conductivity coefficient of at least 1 W/mK;
wherein anchoring elements (80) to anchor the potting compound are present on the measuring head housing (10), wherein the ultrasonic coupling element (40) is fixed by the potting compound (50).

2. Measuring head as claimed in Claim 1, wherein the contact surface E is flat.

3. Measuring head as claimed in one of the previous claims, wherein the measuring head housing (10) is not completely filled with potting compound (50).

4. Measuring head as claimed in Claim 3, wherein a groove is present as an anchoring element (80).

5. Measuring head as claimed in Claim 3, wherein a lug is present as an anchoring element (80).

## Revendications

1. Tête de mesure destinée à un débitmètre à ultrasons avec un boîtier de tête de mesure (10) partiellement ouvert, dans lequel est fixé un élément de couplage ultrasonore (40) avec un élément piézoélectrique (20) et une unité de raccordement électrique (30),
pour laquelle l'élément de couplage ultrasonore (40) et le boîtier de tête de mesure (10) sont au moins partiellement scellés ensemble au moyen d'une masse de scellement (50), et constituent, conjointement avec la masse de scellement (50), une surface de contact E dans la zone de l'ouverture (14) du boîtier de tête de mesure (10),
pour laquelle la distance 'a' entre la paroi interne (16) du
boîtier de tête de mesure (10) et de l'élément de couplage ultrasonore (40) est d'au moins 1 mm dans la zone de la surface de contact E, et la masse de scellement (50) présente un coefficient de conductivité thermique d'au moins 1 W/mK;
pour laquelle sont présents, sur le boîtier de tête de mesure (10), des éléments d'ancrage (80) destinés à l'ancrage de la masse de scellement, l'élément de couplage ultrasonore (40) étant fixé par la masse de scellement (50).

2. Tête de mesure selon la revendication 1, pour laquelle la surface de contact E est plane.

3. Tête de mesure selon l'une des revendications précédentes, pour laquelle le boîtier de tête de mesure (10) n'est pas rempli complètement de masse de scellement (50).

4. Tête de mesure selon la revendication 3, pour laquelle une rainure est présente en tant qu'élément d'ancrage (80).

5. Tête de mesure selon la revendication 3, pour laquelle un talon est présent en tant qu'élément d'ancrage (80).
